# EUROPEAN PATENT SPECIFICATION

(11) **EP 2 622 832 B1**
(45) Date of publication and mention of the grant of the patent: **13.03.2019**
(21) Application number: 11764835.2
(22) Date of filing: 27.09.2011
(51) Int. Cl.: H04M 3/22, G10L 15/26, H04M 3/436

(54) **SPEECH COMPARISON**
SPRACHVERGLEICH
COMPARAISON DE VOIX

(30) Priority: 19.11.2010 GB 201019691; 30.09.2010 EP 10251705
(43) Date of publication of application: 07.08.2013
(73) Proprietor: British Telecommunications public limited company, London EC1A 7AJ (GB)
(72) Inventor: PAWLEWSKI, Mark, London EC1A 7AJ (GB)
(74) Representative: British Telecommunications public limited company Intellectual Property Department
(86) International application number: PCT/GB2011/001399
(87) International publication number: WO 2012/042200

(56) References cited:
- EP-A1- 1 755 324
- WO-A2-2006/126183
- US-A1- 2006 020 459
- US-A1- 2008 123 823

## Description

### Field of the Invention

The invention relates to a method of and an apparatus for, automatically, matching speech recordings. It has particular utility in identifying a caller who has initiated many calls to, for example, a contact centre masquerading as a different person each time.

### Background of the Invention

Fraudulent callers pose a problem for contact centres and businesses. In order to obtain access to other people's accounts, or obtain other business details, fraudulent callers' call a contact centre or business pretending to be the legitimate account holder or customer.

One way of identifying fraudulent callers is to use speaker recognition. The voice of the caller is for example compared to a stored voiceprint of the legitimate account holder or compared to a set of stored voiceprints of already known fraudulent callers.

US20060020459 discloses such a caller verification method including matching a received spoken voice sample against a stored voiceprint and voiceprint template of random phrases for each caller. The voiceprint to use is selected based on the telephone number of the caller.

WO2006/126183 discloses a method for detecting a fraud attempt comprising scoring the voice of the caller against one or more stored voiceprints of known fraudsters.

EP1755324 describes a method for unified messaging where an acoustic model and a language model are generated for each user. If the identity of a speaking party is unknown the vocabulary used can be compared to predefined language models for various speakers in order to identify the speaker.

All three methods share the disadvantage of having to generate models for each caller/user and unless there is such a stored model a speaker cannot be identified or classified as a fraudster.

US20080123823 describes a method for detecting voice mail spam wherein information associated with the incoming message is compared with information associated with other voice mail messages and any voice messages sharing a number of defined attributes are classified as spam.

However, a problem arises in detecting fraudulent callers or calls in amongst a much larger population of legitimate callers or calls.

The problem is that any inaccuracies in whatever check is carried out on a call to find whether that calls is fraudulent, will cause a relatively high number of false alarms in the population of legitimate callers or calls. Indeed, the upset and/or work caused by the number of false alarms may eclipse the benefit gained from genuine alarms, rendering the check counter-productive.

### Summary of the Invention

According to a first aspect of the invention there is provided a computer implemented method of identifying calls initiated by fraudulent callers comprising:
recording speech from a plurality of incoming calls and associating a claimed speaker identity with each call;
matching said recordings to one another; and
identifying calls as being initiated by fraudulent callers;
characterised in that the step of matching said recordings to one another comprises:
- a speech transcription server transcribing at least a portion of the recordings in order to obtain transcripts thereof;
- an analysis module processing said transcripts to find the degree to which they include similar distinctive phrases or words, and determining if said degree of similarity exceeds a predetermined threshold; and
- a matching module matching recordings from the plurality of calls whose degree of similarity exceeds the threshold;
and in that the step of identifying calls as being initiated by fraudulent callers comprises identifying calls as being initiated by fraudulent callers when the claimed speaker identities in respect of the calls are different but degree to which the transcripts of the recordings of the respective calls include similar distinctive phrases or words indicates that the calls match.

Preferably, the method further incorporates the steps of automatically processing the two or more speech recordings to obtain voiceprints thereof; automatically finding a measure of voiceprint similarity between said voiceprints; and using said measure of voiceprint similarity and said measure of wording similarity to match speech recordings.

By using both measures of similarity the uncertainty in the determination as to whether the speech recordings match or not is reduced.

This aspect of the invention has the advantage that a plurality of calls, to for example a contact centre, made by a hitherto unknown person with a fraudulent intent can be detected based solely on his/her use of similar distinct phrases or wording. A further advantage is that the search for suspicious recordings is not based on pre-defined keywords but the fraudulent person can be detected based on any distinct similar phrases or expressions from a rehearsed dialogue, which increases the possibility of identifying fraudulent persons.

Preferably, the method of identifying suspicious calls incorporates both a measure of voiceprint similarity and said measure of wording similarity.

This alleviates problems caused by the large number of calls which might need to be analysed. Current speaker recognition technology will falsely identify a match in around 1% of cases. The inventor has realised that using speaker recognition alone in analysing a large number of speech recordings will falsely identify a number of legitimate recordings as fraudulent. However, the inventor has further realised that by both identifying suspicious recordings based on similar characteristic wording found in transcripts of the recordings, and using voice matching to check that the voice of the speaker in the suspicious recordings is the same, the likelihood of falsely identifying recordings as fraudulent is much reduced.

### Brief Description of the Drawings

There is now provided, by way of example only, a description of some embodiments of the present invention. This is given with reference to the accompanying drawings, in which:
**Figure** 1 provides a schematic overview of a system according to a first embodiment.
**Figure** 2 provides a schematic overview of a fraud analysis server.
**Figure** 3 shows a flow chart of the grouping of calls based on the use of similar phrases.
**Figure** 4 shows a flow chart for a voice analysis of the calls in the group.

### Description of Preferred Embodiments

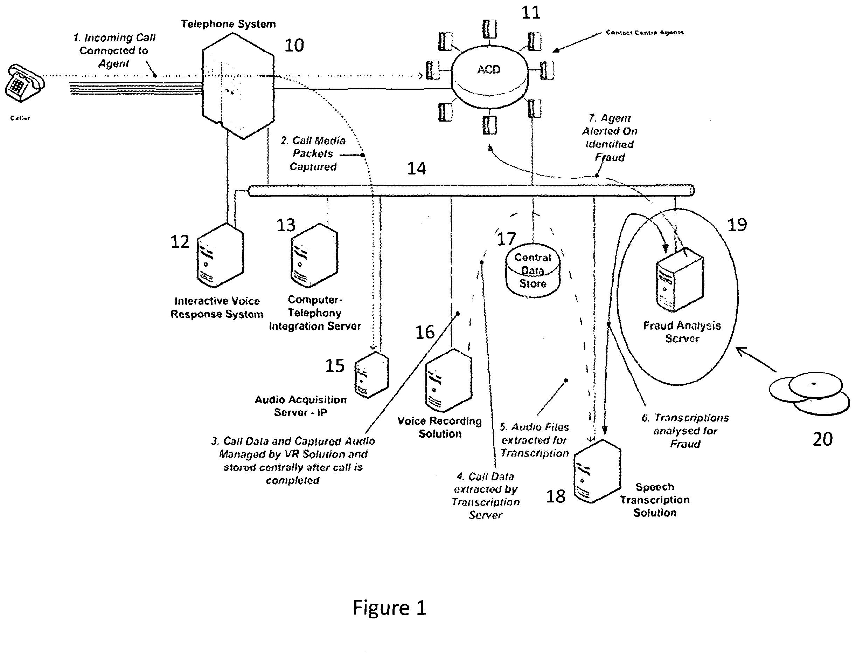

A contact centre system (figure 1) comprises a telephone system 10 for receiving incoming calls and an Automatic Call Distributor (ACD) 11 for distributing the incoming calls between the contact centre agents.

Connected to the telephone system 10 is an Interactive Voice Response System (IVRS) 12. The telephone system 10 and IVRS 12 are both further connected to a Computer -Telephony Integration Server (CTI) 13 via a Local Area Network (LAN) 14. Coupled to the LAN 14 is also an Audio Acquisition Server 15; a Voice Recording Solution 16 for recording incoming calls; a central data store 17, which is also directly connected to the ACD 11; a Speech Transcription server 18 for transcribing the recorded calls to a phoneme or text transcript; and a Fraud Analysis Server 19. The different servers, stores and solutions described here can be installed on the same computer or on different computers.

In operation the telephone system 10 receives a call from a caller. The IVRS 12 plays different options to the caller, who selects one or more of the options, whereafter the call is forwarded to the ACD for connection to a certain contact centre agent based on which option(s) the caller has selected.

During the call the caller's audio, or speech, of the call is collected by the audio acquisition server 15. The captured audio as well as call data, such as CLI (Caller Line Identity), for the call is managed by the voice recording solution 16. The audio normally includes both the spoken name of the caller as well as his account number and the voice recording solution 16 will associate the name or the account number with the call as metadata. After the call is completed the audio and call data is stored in the central data store 17.

The stored audio and call data is used by the fraud analysis server 19 to determine calls that are made by the same person using different identities in order to fraudulently obtain for example account details belonging to other customers. Normally a fraudster withholds his CLI (telephone number) when making a call. In this embodiment the fraud analysis server is therefore arranged to only analyse those calls where the CLI is withheld. Alternatively, in other embodiments the system is configured to analyse all calls or any call where the phone number is not registered as belonging to the claimed identity, or name, of the account holder. The fraud analysis is performed on a batch of stored calls at the end of each day. In alternative embodiments, the analysis might instead be performed every hour; every second day; or maybe once a week. Preferably the analysis is made at least once a day in order to identify the possible fraudsters and to stop fraudulent transactions as soon as possible.

The solution proposed here uses the speech transcription server 18 to produce speech to text or phoneme transcriptions of all the calls where the CLI has been withheld from a daily batch of calls. The speech transcription server 18 extracts audio files from the central data store 17 at the end of each day; performs speech to transcription on the selected audio files and returns the text files to the central data store 17 for storage. The fraud analysis server then gets the transcriptions from the central data store in order to perform a first part of the analysis on these transcriptions. Alternatively, the speech transcription service 18 could pass the transcriptions directly to the fraud analysis server 19.

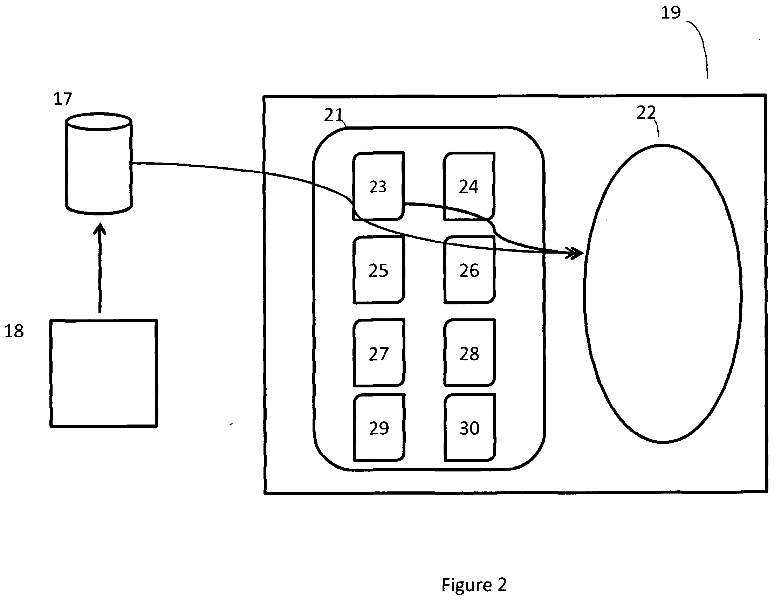

The fraud analysis server 19 of the preferred embodiments will now be described in relation to figure 2. The fraud analysis server comprises a suite of software programs, or modules, stored on a persistent storage device 21 and a processor 22 for executing the executable programme code of the different modules. The modules are a general process module 30 comprising programme code for initiating the different steps of the method, which different steps are performed by the following modules: an approximate string analysis module 23 for comparing transcriptions in order to detect similar phrases in the transcriptions; a grouping module 24 for grouping similar transcriptions and hence calls; a voiceprint generation module 25 for generating voiceprints from each audio file in a group; a voice matching module 26 for matching a voiceprint against speech segments; a calibration module 27 for calibrating the voice matching module; a caller identity comparison module 28 that compares the claimed identities for grouped calls; and a notification module 29 for notifying a contact centre agent about fraudulent calls and discovered fraudulent callers.

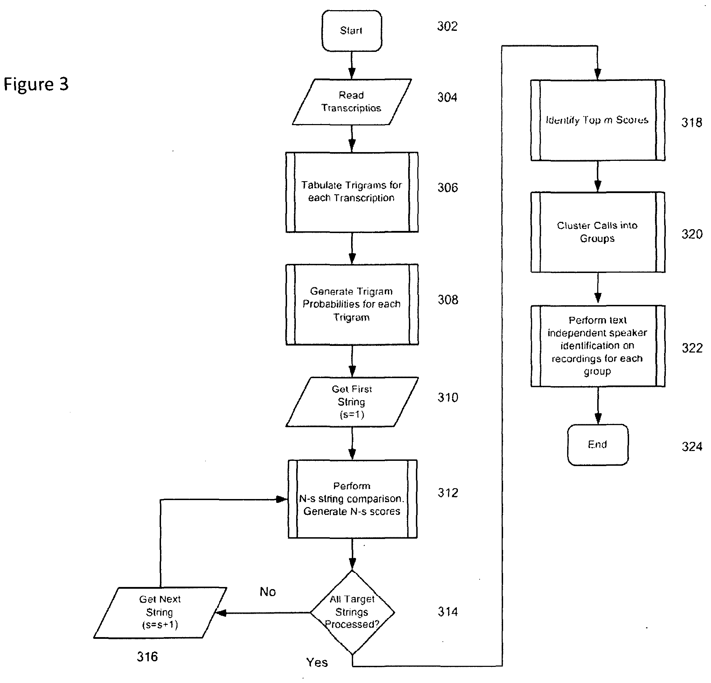

Referring to figure 3, the batch of transcripts to be analysed are uploaded from the central data store 17 by the processor 22, which executes the general process module 30, and stored in a temporary memory. The processor next initiates the string analysis module 23. The string analysis module 23 reads the stored transcripts [304]; tabulates trigrams, which is a sequence of three words in a word string, used in each transcription [306]; generates trigram probabilities for each trigram [308]; and then selects the first target string [310]. In this embodiment the string would be the transcription of the entire caller's portion of the call, and would hence also comprise a claimed identity of the caller. The string analysis module is configured to use an approximate string matching algorithm. The purpose of this approximate string matching algorithm is twofold:
1) It gives a measure of the similarity between two strings
2) It biases the similarity such that uncommon strings receive a higher weighting

The algorithm is therefore effectively looking for specific strings that an imposter caller may have spoken on multiple calls, such that the language is specific to that caller.

The algorithm uses word trigrams. A trigram is a sequence of three words in a word string. As an example the string "I would like my balance please", consists of the following trigrams: "I would like", "would like my", "like my balance", "my balance please". For each call, a list of the trigrams spoken during each call is generated:

| | **Trigram 1** | **Trigram 2** | **Trigram 3** | **Trigram 4** | **Trigram 5** | **Trigram m** |
|---|---|---|---|---|---|---|
| **Call 1** | 0 | 1 | 1 | 0 | 1 | 0 |
| **Call 2** | 0 | 1 | 0 | 0 | 1 | 0 |
| **Call 3** | 1 | 1 | 0 | 0 | 1 | 0 |
| **Call 4** | 1 | 1 | 0 | 0 | 0 | 1 |
| **Call 5** | 1 | 0 | 1 | 0 | 0 | 0 |
| **Call 6** | 1 | 1 | 0 | 1 | 1 | 1 |
| **Call 7** | 1 | 0 | 0 | 0 | 0 | 0 |
| **Call 8** | 1 | 0 | 0 | 0 | 1 | 0 |
| **Call 9** | 1 | 1 | 0 | 1 | 1 | 0 |
| **Call 10** | 0 | 1 | 0 | 0 | 1 | 1 |
| **Call 11** | 0 | 0 | 1 | 0 | 1 | 0 |
| **Call 12** | 0 | 1 | 1 | 1 | 1 | 0 |
| **Call 13** | 0 | 0 | 0 | 1 | 1 | 1 |
| **Call 14** | 1 | 1 | 0 | 1 | 0 | 1 |
| | | | | | | |
| **Call N** | 0 | 0 | 0 | 1 | 0 | 0 |
| | | | | | | |
| **Trigram Probability** | 0.53 | 0.60 | 0.27 | 0.40 | 0.66 | 0.33 |

For this algorithm it is only registered that a trigram has been used; it does not count the number of times it has been used, hence there is only 1 or 0 in each row. From this, the probability of each trigram being spoken during a call is calculated. This is calculated by summing each column and dividing by the number of calls N, [308]. In this embodiment N=15. This probability is then used to provide an inverse weighting on the string similarity scores. From the table above, it can be seen that trigrams 2 and 5 occur in calls 1 and 2. The weighted similarity score between calls 1 and 2 is therefore given by (1/0.6) + (1/0.66) = 3.18.

However, comparing calls 1 and 11, there are two trigrams that occur in both calls. These are trigrams 3 and 5. The weighted similarity score is therefore given by (1/0.27) + (1/0.66) = 5.21. Thus although in both cases only two trigrams occur in each pair of calls, namely trigrams [2 and 5] and trigrams [3 and 5], the weighted similarity score is higher for the comparison between calls 1 and 11. In this case, this increase in score is due to the fact that trigram 3 in the second pair of calls is less common than trigram 2 in the first pair of calls. This implies that the similarity in language used in calls 1 and 11 is more likely to be due to a single individual speaking on both calls. Clearly common phrases used by most callers will receive a low weighting and therefore will not stand out as significant.

There will be a total of (N² - N)/2 string matches. Call 1 will be compared against call 2 to call N, producing match scores s12 to s1n. Similarly, call 2 will be compared against call 3 to call N, producing match scores s23 to s2n. Call 2 does not have to be matched against call 1 because call 1 was already matched against call 2 in the previous step. Hence, there will be a total of (N² - N)/2 matches as shown below

| | **Call 1** | **Call 2** | **Call 3** | **Call 4** | **Call 5** | **Call 6** | **Call N** |
|---|---|---|---|---|---|---|---|
| **Call 1** | | s12 | s13 | s14 | s15 | s16 | s1n |
| **Call 2** | | | s23 | s24 | s25 | s26 | s2n |
| **Call 3** | | | | s34 | s35 | s36 | s3n |
| **Call 4** | | | | | s45 | s46 | s4n |
| **Call 5** | | | | | | s56 | s5n |
| **Call 6** | | | | | | | s6n |
| **Call N** | | | | | | | |

For each of the string comparisons, a score is obtained which reflects the extent to which each of the strings pairs are similar, [312]. The comparison scores are then ranked from the highest weighted similarity score to the lowest weighted similarity score. The top m matches which are defined by the scores that are above a threshold T are selected,[318], these are underlined on the table above and the corresponding string pairs or calls are grouped [320] by the grouping module 24.

A group is generated by taking all the underlined calls in a given column and row. E.g. looking to see which calls are similar to call 4, a group would be identified by scores s24, s34 and s46. This would form a group consisting of calls 2, 3, 4 and 6. Similarly, looking at call 2 would generate a group consisting of calls 3, 4 and 5; looking at call 3 would generate a group consisting of calls 2, 3; looking at call 5 would generate a group consisting of calls 2 and 5; and looking at call 6 would generate a group consisting of calls 4 and 6.

Hence, the string matching analysis, or similarity screening, generates groups of calls in which callers use very similar words or phrases. Since most people tend to use their own characteristic wording it is very likely that it is the same person that has made all, or a majority of, the calls in the group.

The caller identity comparison module 28 compares the claimed identities of the callers in the group. If the claimed identities are different the notification module 29 notifies a contact centre agent or an automatic alarm system that the calls in the group are probably made by the same caller although this caller has used different identities for asking about different or the same accounts.

In a second embodiment an additional step of text independent speaker identification on recordings for each group is performed in order to verify with high confidence that the calls in the group are in fact made by the same person, [322].

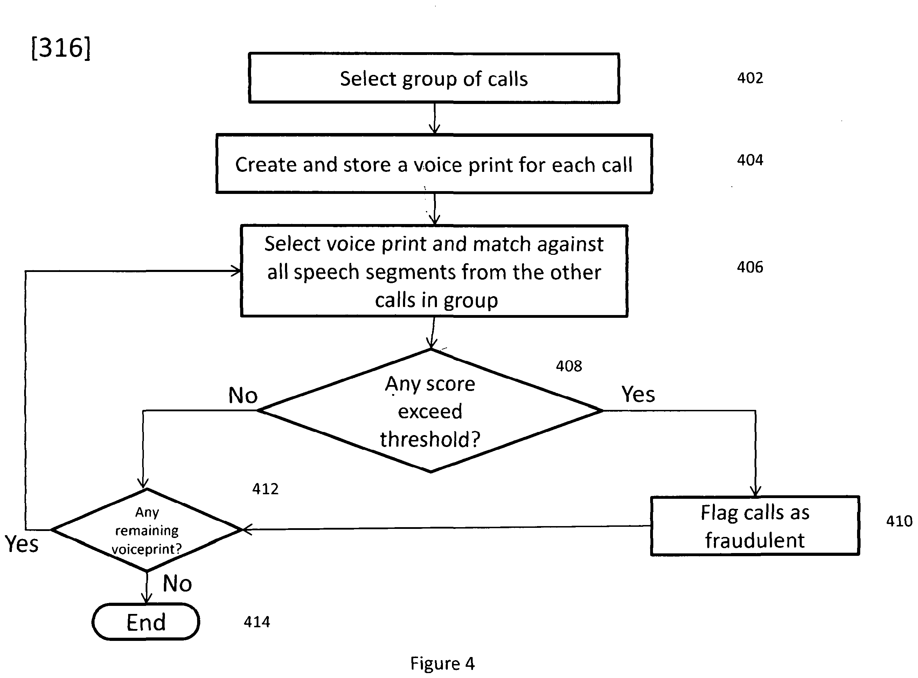

The process of step [322] is described in more detail in the flow chart shown in figure 4.

First a group of P calls identified by the transcript comparison algorithm (figure 3) is selected for analysis [402] and then the voiceprint generation module 25 creates and temporarily stores a voiceprint for each call in the group, [404].

Almost all of the caller's speech from each call is used for generating the voiceprint and the only speech that is not used is a portion of the speech that is subsequently used by the calibration module 27 to calibrate the voice analysis system. Preferably between 80 - 95% of the speech is used for the voiceprint and the rest is used for the calibration but other proportions can be selected.

Next a first voiceprint is selected and matched against all voice recordings from the other P-1 calls in the group in order to generate a set of likelihood scores for how similar the voice is to each of the other voices in the group [406].

Then each score is compared to a threshold and if the score exceeds the threshold the call from which the voiceprint was generated and the call it was compared against are determined to be generated by the same caller [408] and the calls and the caller, which most likely is unknown, are flagged as fraudulent [410].

If none of the scores exceed the threshold it is checked if there are any remaining voiceprints in the group that have not been matched against the other voice recordings [412]. If there are any remaining voiceprints the matching process is repeated otherwise the process ends [414].

Next the caller identity comparison module 28 compares the claimed identities of the callers in the group. If the claimed identities are different and the voices match the notification module 29 notifies a contact centre agent or an automatic alarm system that the calls in the group are probably made by the same caller although this caller has used different identities for asking about different or the same accounts.

In a third embodiment a voice analyses of all received calls in a batch is performed before the string matching analysis. Given that speaker verification error rates are in the region of 1% this means that if choosing at random one person out of 100,000 people, about 1000 people would be found who all sound the same as the chosen person. Thus by initially performing a voice analysis on all calls received at a call centre callers who sound the same, acoustically, can be found and grouped together. The string matching analysis as described in association with the first embodiment is then performed on the calls in each group of similar voices and if a distinct wording or phrase is found in two or more of the calls in the group the system would verify that the calls are indeed made by the same person.

The order of the process, wording similarity screening then voice analysis or voice analysis then wording similarity screening, does not matter irrespective of the number of groups the string matching generates, but one order might be more efficient than the other, depending on the groups that each generate.

A suitable decision threshold for the voice analysis is estimated in a calibration step by examining the spread of scores obtained by matching segments of speech against the voiceprint for caller 1. When a speech segment from caller 1 is matched against the voiceprint for caller 1, this produces a score S1. The larger the score, the more likely it is that the speech segment matches the voice that was used to make the voiceprint. It would therefore be expected that the score for S1, which is from the same caller, would be the largest. As explained earlier the speech segment which is matched against the voiceprint is not actually contained in the voiceprint, but is the portion used for calibration, so this gives a realistic estimation of the score that would be expected for the case when the caller's speech does in fact match the voiceprint.

For a total of P audio samples identified, scores S2 - SP are also calculated by comparing speech segments from the audio samples against the voiceprint from caller 1. If the callers corresponding to these scores are not the same person who made call 1, then the scores would be expected to be smaller than S1.

The (P-1) scores S2 - SP are ranked in descending value. If the highest score is closer to S1 than it is to the next lower score, then this is a strong indication that the speech used to generate the score S2 came from the same caller as that used to produce S1 and could therefore correspond to a fraudulent caller. The exact ratio scores is a system parameter and can be adjusted as required.

If there is three calls that all have the same speaker, the calls generating scores S1, S2 and S3, score s2 could be closer to s3 than to S1 which would indicate that it may not be the same speaker. If so, the best way is to run a calibration trial and gather statistics on typical calls. In the absence of a calibration trial, one possible decision scheme is to take the average of all the scores to get Sₐᵥₑ. Then S2 matches S1 if (S2/S1) > (Sₐᵥₑ/S2), otherwise S2 is closer to the average of the group.

Once it is established by the fraud analysis server that certain calls related to different accounts in a group are generated by the same unidentified caller these calls are flagged or highlighted in a suitable manner and brought to the attention of a contact centre agent at the contact centre. The transactions initiated by the fraudulent caller can then be stopped, especially if the analysis is performed the same day as the transaction was initiated, and measures for protecting the legitimate account holders, such as changing the account details, activated.

Preferably, to prevent the fraudulent caller from initiating further fraudulent activities a voiceprint is generated from the speech of the caller (if not already generated) and stored in a fraudulent caller database at the contact centre. Thus, the next time he/she calls the contact centre a speech recognition server will compare speech segments from the call to voiceprints in the fraudulent caller database; the caller identified as a fraudulent caller and consequently prevented from retrieving information or initiating any transactions.

It will be seen that the above embodiments have the advantage of detecting from a huge batch of calls previously unknown suspicious callers, who may be fraudsters, but whose voices are not already captured on a suspect voiceprint database. The proposed method and system actively searches for potential fraudsters and uses characteristics of the fraudster's call pattern, indicative of a rehearsed dialog, to help make a short list of potential fraud candidates.

By transforming the speech of the calls to strings of phonemes or text it is possible to compare a very large number of calls in order to find similar call patterns that indicate that certain calls are made by the same person, and hence avoiding the complexity and unreliability of speaker recognition that is unavoidably introduced when speaker recognition is performed on a very large number of calls.

It would be apparent to one skilled in the art that the invention can be embodied in various ways and implemented in many variations.

The calls can for example be grouped based on the claimed caller identity and then analysed for similar characteristic wording and/or matching voice characteristics. If there is no similar characteristic wording and/or the voices do not match, the notification module would notify a contact centre agent that the calls are suspicious.

The described embodiments relate to contact centres and calls to the centre; however, the same analysis can be made on any recordings of speech in order to match recordings and identify speech that originates from the same speaker.

Instead of being separate modules, the modules in the fraud analyses server 19 can be integrated on one or more modules. For example the approximate string analysis module 23 for comparing transcripts can be integrated with the grouping module 24.

In the optional voice recognition step errors, or other characteristics, introduced by different handsets can be used for identifying that calls related to different accounts are made from the same handset. Since a fraudulent caller probably uses the same handset for all calls the characteristics of handsets can be used as an alternative to or in addition to comparing only voice characteristics.

Whilst in the preferred embodiment the software modules are stored in a persistent memory of the fraud analysis server 19 , the modules could alternatively be stored in a portable memory 20, such as DVD-rom or USB stick, which when inserted in and executed by a general purpose computer performs the preferred embodiments for detecting fraudulent callers .

The string matching algorithm in the described embodiments uses word trigrams; however the algorithm could also use bigrams, word pairs, or any number of words as well as strings of phonemes. Phonemes are the basic unit of speech of a language and a spoken word therefore comprises one or more phonemes. The speech transcription solution could therefore transform the speech of the calls to text comprising words or strings of phonemes that constitute parts of these words.

Other approximate string matching algorithms than the preferred algorithm described above can be used. Reference is for example made to the Levenshtein algorithm which calculates the least number of edit operations that are necessary to modify one string to obtain the other string. This algorithm can be applied to words, not letters, or can be applied to phoneme symbols. Another possible algorithm to use would be Dynamic time warping.

In summary, fraudulent callers that masquerade as legitimate callers in order to discover details of bank accounts or other accounts are an increasing problem. In order to detect possible fraudsters and preventing them from obtaining such details a method and system is proposed that transform the recorded speech of a batch of incoming calls to strings of phonemes or text. Thereafter similar speech patterns, such as distinct similar phrases or wording, in the recorded speech are determined and calls having similar speech patterns, and preferably also similar acoustic properties, are grouped together and identified as being from the same fraudulent caller. Transactions initiated by the fraudulent caller can as a result be stopped and preferably a voiceprint of the fraudulent caller's speech is generated and stored in a database for further use.

## Claims

1. A computer implemented method of identifying calls initiated by fraudulent callers comprising:
recording speech from a plurality of incoming calls and associating a claimed speaker identity with each call;
matching said recordings to one another; and
identifying calls as being initiated by fraudulent callers;
**characterised in that** the step of matching said recordings to one another comprises:
- a speech transcription server (18) transcribing at least a portion of the recordings in order to obtain transcripts thereof;
- an analysis module (23) processing said transcripts to find the degree to which they include similar distinctive phrases or words, and determining if said degree of similarity exceeds a predetermined threshold; and
- a matching module (24) matching recordings from the plurality of calls whose degree of similarity exceeds the threshold;
and **in that** the step of identifying calls as being initiated by fraudulent callers comprises identifying calls as being initiated by fraudulent callers when the claimed speaker identities in respect of the calls are different but the degree to which the transcripts of the recordings of the respective calls include similar distinctive phrases or words indicates that the calls match.

2. A method of identifying calls initiated by fraudulent callers according to claim 1 wherein the step of matching said speech recordings comprises:
processing the speech recordings to obtain (404) voiceprints thereof;
finding a measure of voiceprint similarity between said voiceprints by matching (406) each voiceprint against the other speech recordings; and
using said measure of voiceprint similarity and said measure of phrase or word similarity to match speech recordings.

3. A method according to claim 2 wherein the measure of voiceprint similarity generates a voice match likelihood score and the recordings are matched if the voice match likelihood score exceeds a threshold.

4. A method according to claim 3 wherein the voiceprint is generated from 80 to 95 % of the speech from a recording and the remaining portion of the speech is used for calibration of said threshold.

5. A method according to any of the preceding claims wherein the transcripts are processed using an approximate string matching algorithm.

6. A method according to claim 5 wherein the approximate string matching algorithm produces string similarity scores which are weighted by the infrequency of usage of wording during a recording.

7. A method according to any of the preceding claims wherein the transcript comprises a string of phonemes.

8. An apparatus arranged in operation to identify calls initiated by fraudulent callers, the apparatus comprising computer-implemented modules arranged to record speech from a plurality of incoming calls and to associate a claimed speaker identity with each call; to match said recordings to one another; and to identify calls as being initiated by fraudulent callers; **characterised in that** the apparatus comprises:
- a speech transcription server (18) arranged to transcribe at least a portion of the recordings in order to obtain transcripts thereof;
- an analysis module (23) arranged to process said transcripts to find the degree to which they include similar distinctive phrases or words and to determine if said degree of similarity exceeds a predetermined threshold; and
- a matching module (24) arranged to match recordings from the plurality of calls whose degree of similarity exceeds the threshold;
and **in that** the identifying of calls as being initiated by fraudulent callers comprises identifying calls as being initiated by fraudulent callers when the claimed speaker identities in respect of the calls are different but the degree to which the transcripts of the recordings of the respective calls include similar distinctive phrases or words indicates that the calls match.

9. A computer program or suite of computer programs executable by a computer system to cause the computer system to perform the method of any one of claims 1 to 7.

10. A non-transitory computer readable storage medium storing a computer program or a suite of computer programs according to claim 9.

## Patentansprüche

1. Computerimplementiertes Verfahren zum Identifizieren von Anrufen, die durch betrügerische Anrufer eingeleitet werden, umfassend:
Aufzeichnen von Sprache von einer Vielzahl von eingehenden Anrufen und Assoziieren einer behaupteten Sprecheridentität mit jedem Anruf;
Abgleichen der Aufzeichnungen miteinander; und
Identifizieren von Anrufen als durch betrügerische Anrufer eingeleitet;
**dadurch gekennzeichnet, dass** der Schritt des Abgleichens der Aufzeichnungen miteinander umfasst:
- einen Sprachtranskriptionsserver (18), der mindestens einen Abschnitt der Aufzeichnungen transkribiert, um Transkriptionen davon zu erlangen;
- ein Analysemodul (23), das die Transkriptionen verarbeitet, um das Ausmaß zu finden, zu dem sie ähnliche distinkte Phrasen oder Wörter enthalten, und zu bestimmen, ob das Ausmaß der Ähnlichkeit einen im Voraus bestimmten Schwellenwert übersteigt; und
- ein Abgleichungsmodul (24), das Aufzeichnungen aus der Vielzahl von Anrufen abgleicht, deren Ausmaß der Ähnlichkeit den Schwellenwert übersteigt;
und dadurch, dass der Schritt des Identifizierens von Anrufen als durch betrügerische Anrufer eingeleitet umfasst, Anrufe als durch betrügerische Anrufer eingeleitet zu identifizieren, wenn die behaupteten Sprecheridentitäten in Bezug auf die Anrufe verschieden sind, aber das Ausmaß, zu dem die Transkriptionen der Aufzeichnungen der jeweiligen Anrufe ähnliche distinkte Phrasen oder Wörter enthalten, angibt, dass die Anrufe übereinstimmen.

2. Verfahren zum Identifizieren von Anrufen, die durch betrügerische Anrufer eingeleitet werden, nach Anspruch 1, wobei der Schritt des Abgleichens der Sprachaufzeichnungen umfasst:
Verarbeiten der Sprachaufzeichnungen, um Stimmabdrucke davon zu erlangen (404);
Finden eines Maßes von Stimmabdruckähnlichkeit zwischen den Stimmabdrucken durch Abgleichen (406) jedes Stimmabdrucks mit den anderen Sprachaufzeichnungen; und
Verwenden des Maßes von Stimmabdruckähnlichkeit und des Maßes von Phrasen- oder Wortähnlichkeit zum Abgleichen von Sprachaufzeichnungen.

3. Verfahren nach Anspruch 2, wobei das Maß von Stimmenabdruckähnlichkeit eine Stimmenabgleichung-Wahrscheinlichkeitskennziffer erzeugt und die Aufzeichnungen abgeglichen werden, wenn die Stimmenabgleichung-Wahrscheinlichkeitskennziffer einen Schwellenwert übersteigt.

4. Verfahren nach Anspruch 3, wobei der Stimmenabdruck von 80 bis 95 % der Sprache aus einer Aufzeichnung erzeugt wird und der übrige Anteil der Sprache für Kalibrierung des Schwellenwerts verwendet wird.

5. Verfahren nach einem der vorstehenden Ansprüche, wobei die Transkriptionen unter Verwendung eines Algorithmus zum Abgleichen angenäherter Zeichenfolgen verarbeitet werden.

6. Verfahren nach Anspruch 5, wobei der Algorithmus zum Abgleichen angenäherter Folgen Folgenähnlichkeitskennziffern produziert, die mit der Seltenheit der Verwendung von Wörtern während einer Aufzeichnung gewichtet werden.

7. Verfahren nach einem der vorstehenden Ansprüche, wobei die Transkription eine Folge von Phonemen umfasst.

8. Vorrichtung, angeordnet, um im Betrieb durch betrügerische Anrufer eingeleitete Anrufe zu identifizieren, die Vorrichtung umfassend computerimplementierte Module, die angeordnet sind, Sprache von einer Vielzahl von eingehenden Anrufen aufzuzeichnen und eine behauptete Sprecheridentität mit jedem Anruf zu assoziieren; die Aufzeichnungen miteinander abzugleichen; und Anrufe als durch betrügerische Anrufer eingeleitet zu identifizieren;
**dadurch gekennzeichnet, dass** die Vorrichtung umfasst:
- einen Sprachtranskriptionsserver (18), angeordnet zum Transkribieren mindestens eines Abschnitts der Aufzeichnungen, um Transkriptionen davon zu erlangen;
- ein Analysemodul (23), angeordnet zum Verarbeiten der Transkriptionen, um das Ausmaß zu finden, zu dem sie ähnliche distinkte Phrasen oder Wörter enthalten, und zu bestimmen, ob das Ausmaß der Ähnlichkeit einen im Voraus bestimmten Schwellenwert übersteigt; und
- ein Abgleichungsmodul (24), angeordnet zum Abgleichen von Aufzeichnungen aus der Vielzahl von Anrufen, deren Ausmaß der Ähnlichkeit den Schwellenwert übersteigt;
und dadurch, dass der Schritt des Identifizierens von Anrufen als durch betrügerische Anrufer eingeleitet umfasst, Anrufe als durch betrügerische Anrufer eingeleitet zu identifizieren, wenn die behaupteten Sprecheridentitäten in Bezug auf die Anrufe verschieden sind, aber das Ausmaß, zu dem die Transkriptionen der Aufzeichnungen der jeweiligen Anrufe ähnliche distinkte Phrasen oder Wörter enthalten, angibt, dass die Anrufe übereinstimmen.

9. Computerprogramm oder Paket von Computerprogrammen, ausführbar durch ein Computersystem, um zu bewirken, dass das Computersystem das Verfahren nach einem der Ansprüche 1 bis 7 durchführt.

10. Nicht vergängliches computerlesbares Speichermedium, das ein Computerprogramm oder ein Paket von Computerprogrammen nach Anspruch 9 speichert.

## Revendications

1. Procédé mise en oeuvre par ordinateur pour identifier des appels initiés par des appelants frauduleux comprenant les étapes suivantes :
enregistrer la voix d'une pluralité d'appels entrants et associer une identité de locuteur revendiquée à chaque appel ;
faire correspondre lesdits enregistrements les uns aux autres ; et
identifier des appels comme étant initiés par des appelants frauduleux ;
**caractérisé en ce que** l'étape de mise en correspondance desdits enregistrements entre eux comprend les étapes suivantes :
- un serveur de transcription vocale (18) transcrivant au moins une partie des enregistrements afin d'en obtenir des transcriptions ;
- un module d'analyse (23) traitant lesdites transcriptions pour déterminer dans quelle mesure elles contiennent des phrases ou des mots distinctifs similaires, et déterminant si ledit degré de similitude dépasse un seuil prédéterminé ; et
- un module de mise en correspondance (24) faisant correspondre les enregistrements de la pluralité d'appels dont le degré de similitude dépasse le seuil ;
et **en ce que** l'étape d'identification des appels comme étant initiés par des appelants frauduleux comprend d'identifier des appels comme étant initiés par des appelants frauduleux lorsque les identités du locuteur revendiqué pour les appels sont différentes mais le degré auquel les transcriptions des enregistrements des appels respectifs incluent des phrases ou des mots distincts similaires indique que les appels correspondent.

2. Procédé d'identification d'appels initiés par des appelants frauduleux selon la revendication 1, dans lequel l'étape de mise en correspondance desdits enregistrements vocaux comprend les étapes suivantes :
traiter les enregistrements vocaux pour obtenir (404) des empreintes vocales de ceux-ci ;
trouver une mesure de similitude d'empreinte vocale entre lesdites empreintes vocales en faisant correspondre (406) chaque empreinte vocale avec les autres enregistrements vocaux ; et
utiliser ladite mesure de similitude d'empreinte vocale et ladite mesure de similitude de phrase ou de mot pour faire correspondre des enregistrements vocaux.

3. Procédé selon la revendication 2, dans lequel la mesure de similitude d'empreinte vocale génère un score de vraisemblance de concordance vocale, et les enregistrements sont mis en correspondance si le score de vraisemblance de concordance vocale dépasse un seuil.

4. Procédé selon la revendication 3, dans lequel l'empreinte vocale est générée à partir de 80 à 95 % de la parole d'un enregistrement, et la partie restante de la parole est utilisée pour l'étalonnage dudit seuil.

5. Procédé selon l'une quelconque des revendications précédentes, dans lequel les transcriptions sont traitées en utilisant un algorithme de mise en correspondance de chaînes par approximation.

6. Procédé selon la revendication 5, dans lequel l'algorithme de mise en correspondance de chaînes par approximation produit des scores de similitude de chaînes qui sont pondérés par la rareté de l'utilisation des formulations au cours d'un enregistrement.

7. Procédé selon l'une quelconque des revendications précédentes, dans lequel la transcription comprend une chaîne de phonèmes.

8. Appareil agencé en fonctionnement pour identifier des appels initiés par des appelants frauduleux, l'appareil comprenant des modules mis en oeuvre par ordinateur agencés pour enregistrer la voix d'une pluralité d'appels entrants et pour associer une identité de locuteur revendiquée à chaque appel ; pour faire correspondre lesdits enregistrements les uns aux autres ; et pour identifier les appels comme étant initiés par des appelants frauduleux ;
**caractérisé en ce que** l'appareil comprend :
- un serveur de transcription vocale (18) agencé pour transcrire au moins une partie des enregistrements afin d'en obtenir des transcriptions ;
- un module d'analyse (23) agencé pour traiter lesdits transcriptions pour déterminer dans quelle mesure elles contiennent des phrases ou des mots distinctifs similaires et pour déterminer si ledit degré de similitude dépasse un seuil prédéterminé ; et
- un module de mise en correspondance (24) agencé pour faire correspondre les enregistrements de la pluralité d'appels dont le degré de similitude dépasse le seuil ;
et **en ce que** l'identification des appels comme étant initiés par des appelants frauduleux comprend d'identifier des appels comme étant initiés par des appelants frauduleux lorsque les identités du locuteur revendiqué pour les appels sont différentes mais le degré auquel les transcriptions des enregistrements des appels respectifs incluent des phrases ou des mots distincts similaires indique que les appels correspondent.

9. Programme informatique ou une suite de programmes informatiques exécutables par un système informatique pour amener le système informatique à exécuter le procédé de l'une quelconque des revendications 1 à 7.

10. Support de stockage non transitoire lisible par ordinateur stockant un programme informatique ou une suite de programmes informatiques selon la revendication 9.
